# EUROPÄISCHE PATENTANMELDUNG

(11) **EP 4 606 595 A1**
(43) Veröffentlichungstag der Anmeldung: **27.08.2025**
(21) Anmeldenummer: 25159343.0
(22) Anmeldetag: 21.02.2025
(51) Int. Cl.: B60B 1/00, B60B 1/02, B60B 1/04, B60B 5/02

(54) **LAUFRADKOMPONENTE FÜR EIN FAHRRAD**

(30) Priorität: 22.02.2024 DE 102024105066
(71) Anmelder: DT Swiss AG, 2504 Biel (CH)
(72) Erfinder: Walthert, Martin, 3270 Aarberg (CH); Henig, Andreas, 2504 Biel (CH); Garthaus, Christian, 01099 Dresden (DE)
(74) Vertreter: BSB Patentanwälte Schütte & Engelen Partnerschaft mbB

(57) **Zusammenfassung**

Laufradkomponente für Fahrräder mit einer gerade ausgebildeten Speiche (10) mit einem Mittelstück (11) und zwei Endstücken (20, 30), um eine Nabe (108) mit einer Felge (109) lösbar zu verbinden. Wenigsten eines der Endstücke (30) umfasst einen Gewindeabschnitt (31). Der Gewindeabschnitt (31) ist einstückig mit dem Endstück (20, 30) ausgebildet. Die Speiche ist ohne Schlaufen und Ösen ausgebildet ist. Mittels der Endstücke (20) kann die Speiche an einer Nabe (108) und einer Felge (109) abgestützt werden. Die Speiche (10) ist aus einem Faserverbundwerkstoff (2) gefertigt und umfasst ein Matrixmaterial (3) und darin eingebettete Verstärkungselemente (4). Die Endstücke (20, 30) sind einstückig mit dem Mittelstück (11) ausgebildet und bilden jeweils ein Ende (16, 17) der Speiche (10). Wenigstens einige der Verstärkungselemente (4) sind als Langfasern (5) ausgebildet und erstrecken sich vollständig durch das Mittelstück (11) und jeweils über wenigstens einen wesentlichen Teil beider Endstücke (20, 30). Wenigstens ein Endstück (20, 30) weist einen Querschnittsbereich (25, 35) mit darin eingebetteten Langfasern (5) als Verstärkungselementen (4) und wenigstens einen Querschnittsabschnitt (26, 36) ohne darin eingebettete Langfasern (5) auf.

## Beschreibung

Die vorliegende Erfindung betrifft eine Laufradkomponente für ein Fahrzeug und insbesondere für ein im bestimmungsgemäßen Normalbetrieb oder Regelbetrieb wenigstens teilweise muskelbetriebenes Zwei- oder Mehrrad wie ein Fahrrad und umfasst eine Speiche, die ein Mittelstück und zwei Endstücke umfasst, um die Speiche mit einer Nabe eines Laufrades bzw. einer Felge eines Laufrades lösbar zu verbinden. Dabei ist die Speiche aus wenigstens einem Faserverbundwerkstoff gefertigt und umfasst ein Matrixmaterial und darin eingebettete Verstärkungselemente.

Im Stand der Technik sind verschiedene Laufradkomponenten für Fahrräder und dergleichen bekannt geworden, die separate Speichen umfassen. Oft werden Metallspeichen eingesetzt, die meist aus einem Stahl hergestellt werden und an einem Ende einen gekröpften Kopf und an dem anderen Ende ein Gewinde aufweisen. Dadurch kann die Speiche mit dem gekröpften Ende beispielsweise an der Nabe gehalten werden, während das mit einem Gewinde ausgerüstete Ende an einem Speichennippel an der Felge gehalten wird. Durch das Verschrauben des Speichennippels kann eine geeignete Speichenspannung eingestellt und das Rad zentriert werden. Solche Laufräder mit metallischen Speichen sind schon lange bekannt und bieten eine zuverlässige Performance. Es besteht aber der Wunsch, das Gewicht der Laufräder eines Fahrrads zu verringern.

Es sind Laufräder für Fahrräder aus Faserverbundwerkstoff bekannt geworden, bei denen die Speichen direkt mit der Felge zusammen hergestellt werden. Solche Laufräder können ein geringes Gewicht aufweisen, sind aber komplex in der Herstellung und können nicht ohne Weiteres gewartet werden. Schon bei kleineren Defekten muss regelmäßig das ganze Laufrad ausgetauscht werden, was nicht sehr nachhaltig ist.

Mit der US 5,350,221 ist eine separate Speiche aus Faserverbundwerkstoff bekannt geworden, die durch ein Spritzgießverfahren hergestellt wird. Dabei wird in einen Hohlraum einer Herstellform kurzfasriger Faserverbundwerkstoff eingespritzt, sodass sich das Fasermaterial in dem Hohlraum der Form homogen verteilt. An dem einen Ende weist die Speiche einen gekröpften Kopf und an dem anderen Ende ein Gewinde zum Verschrauben mit einem Speichennippel auf. Eine solche Speiche hat sich in den letzten Jahrzehnten am Markt nicht durchgesetzt. In der gleichen Schrift ist auch eine Speiche beschrieben, bei der metallische Enden eingesetzt werden, sodass die Kraft ableitenden Stellen an der Speiche aus Metall gefertigt sind.

Mit der EP 3 459 759 B1 ist eine Speiche aus einem Faserverbundwerkstoff bekannt geworden, bei der der Speichenkörper durch ein Pultrusionsverfahren hergestellt wird. An dem Speichenkörper werden gestufte Flächen und geneigte Bereiche vorgesehen, auf die Hülsen aufgesteckt werden, die insbesondere aus rostfreiem Stahl bestehen und die Verbindung zu der Nabe bzw. der Felge herstellen. Eine solche Speiche funktioniert grundsätzlich, ist aber komplex in der Herstellung.

Aus der WO 03/020535A2 ist eine mit Fasern verstärkte Speiche für ein Fahrradrad bekannt geworden, die einen langgestreckten Speichenkörper aufweist, auf den Hülsen aufgesteckt werden, bevor die Enden des Speichenkörpers verdickt werden, um so die separaten Hülsen an dem Speichenkörper zu halten. Die zur Befestigung der Speiche an der Felge vorgesehene Hülse weist eine kugelförmige Auflage auf, um ein Ausrichten der Speiche zu ermöglichen. Die Hülse an dem anderen Ende umfasst ein Außengewinde, um die Speiche an der Nabe mit einem entsprechenden Gewinde zu verschrauben. Der Speichenkörper wird durch Pultrusion hergestellt. Auch diese Speiche ist funktionell zufriedenstellend und ermöglicht ein leichtes Gewicht. Nachteilig ist aber der erhebliche Herstellungsaufwand.

Es ist deshalb die Aufgabe der vorliegenden Erfindung, eine Laufradkomponente mit einer Speiche zur Verfügung zu stellen, welche einfacher herzustellen, ein geringes Gewicht und eine hohe Belastbarkeit aufweist.

Diese Aufgabe wird gelöst durch eine Laufradkomponente mit den Merkmalen des Anspruchs 1. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Laufradkomponente für ein Fahrzeug und insbesondere für ein Fahrrad weist eine gerade ausgebildete (und langgestreckte) Speiche mit einem Mittelstück und zwei Endstücken auf, um die Speiche mittels der Endstücke lösbar mit einer Nabe (eines Laufrades) und mit einer Felge (des Laufrades) lösbar zu verbinden. Wenigstens eines der Endstücke umfasst einen Gewindeabschnitt. Der Gewindeabschnitt ist einstückig mit dem Endstück ausgebildet. Die Speiche ist aus wenigstens einem Faserverbundwerkstoff gefertigt und umfasst wenigstens ein Matrixmaterial und darin eingebettete Verstärkungselemente. Die Speiche ist insbesondere (an der Oberfläche) glatt und insbesondere (vollständig) ohne Schlaufen und Ösen ausgebildet. Die Endstücke sind einstückig mit dem Mittelstück ausgebildet und bilden jeweils ein Ende der Speiche. Wenigstens einige der Verstärkungselemente sind als Langfasern ausgebildet und erstrecken sich vollständig durch das Mittelstück und jeweils über wenigstens einen wesentlichen Teil beider Endstücke der Speiche. Wenigstens ein Endstück umfasst einen Querschnittsbereich mit darin eingebetteten Langfasern als Verstärkungselementen und wenigstens einen Querschnittsabschnitt ohne darin eingebettete Langfasern.

Die erfindungsgemäße Laufradkomponente hat viele Vorteile. Ein erheblicher Vorteil der erfindungsgemäßen Laufradkomponente besteht darin, dass eine leichte und einfach zu fertigende Laufradkomponente zur Verfügung gestellt wird, die hoch belastbar ist.

Die einstückig mit dem Mittelstück ausgebildeten Endstücke ermöglichen eine hohe Belastbarkeit und Verhindern Setzungserscheinungen, die bei mehrteiligen Speichen auftreten können. Das kann die Speichenspannung und die Zentrierung eines Laufrades negativ beeinflussen. Bei der Erfindung wird das verhindert.

Die erfindungsgemäße Speiche kann im Wesentlichen durch Pultrusion hergestellt werden, wobei dann an das Mittelstück die Endstücke oder Teile davon angespritzt werden, während das Matrixmaterial des Mittelstücks noch flüssig ist oder nachdem es wieder flüssig gemacht wurde. Dadurch entsteht eine einstückige Laufradkomponente, bei der auch im Inneren der Speiche keine Verklebungen, Klebeschichten oder trennende Grenzschichten vorliegen. Es ist denkbar, dass mikroskopisch gesehen Grenzschichten oder doch eher Grenzbereiche erkennbar sind. Aber jedenfalls ist keine separate Zwischenschicht wie eine Klebeschicht vorhanden.

Die Speiche weist insbesondere einen gerade ausgebildeten und langgestreckten Speichenkörper auf, der ein Mittelstück und an dessen zwei gegenüberliegenden und voneinander entfernten Enden einstückig damit ausgebildete Endstücke umfasst sind. Die Speiche ist gerade ausgebildet und weist keine Kröpfung auf.

Der Speichenkörper weist vorzugsweise keine Durchgangslöcher oder Vertiefungen auf, an denen andere Teile eingehakt werden können. Die Oberfläche der Endstücke oder Verbindungselemente ist abgesehen von den Gewinden vorzugsweise glatt ausgebildet und verfügt über keine Haken und Ösen.

Wenigstens einige der Langfasern erstrecken sich in einem Querschnittsbereich vollständig (d. h. durchgängig oder "endlos") durch das Mittelstück und jeweils über wenigstens einen wesentlichen Teil beider Endstücke. Als Langfasern werden lange Verstärkungsfasern und zum Beispiel Endlosfasern eingesetzt, die beispielsweise nach einer bzw. der Pultrusion entsprechend auf die Länge der Speiche abgeschnitten werden. Prägnant gesagt, können im Rahmen dieser Anmeldung lange Verstärkungsfasern auch Langfasern genannt werden. Die Speichen können hohe Zugkräfte übertragen. Dazu tragen die Langfasern erheblich bei, die sich (praktisch) von einem Ende bis zum anderen Ende der Speiche erstrecken. In bevorzugten Ausgestaltungen erstreckt sich (nahezu) jede Langfaser vollständig durch die Speiche.

In einer bevorzugten Ausgestaltung weist wenigstens ein Endstück einen größeren Außendurchmesser auf als wenigstens eine Querabmessung in dem Mittelstück. Insbesondere ist wenigstens ein Außendurchmesser eines Endstücks größer als eine minimale Querabmessung und/oder eine mittlere Querabmessung und/oder eine maximale Querabmessung in dem Mittelstück.

Dabei wird unter einer Querabmessung eine quer bzw. senkrecht zur Längsachse oder Symmetrieachse der Speiche ausgerichtete Abmessung verstanden. In einfachen Ausgestaltungen kann die Querabmessung der Durchmesser in einem zentralen Bereich des Mittelstücks sein.

In einer bevorzugten Ausführungsform weist wenigstens ein Endstück und insbesondere wenigstens der Kopfabschnitt einen (unmittelbar oder auch mittelbar) an das Mittelstück der Speiche angrenzenden Konusabschnitt und einen sich wiederum daran anschließenden Stützabschnitt auf. Der einstückig mit dem gesamten Speichenkörper gefertigte Konusabschnitt sorgt zusammen mit dem Stützabschnitt für eine zuverlässige Abstützung der Speiche.

Vorzugsweise weist wenigstens eines der Endstücke einen Gewindeabschnitt (mit dem Gewinde) zur Verschraubung mit einem Speichennippel auf. Vorzugsweise weist wenigstens eines der Endstücke einen Kopfabschnitt zur Abstützung der Speiche aufweist. Es ist möglich und besonders bevorzugt, dass eines der Endstücke einen Kopfabschnitt zur Abstützung der Speiche und das andere Endstück einen Gewindeabschnitt zur Verschraubung mit einem Speichennippel umfasst.

Möglich ist es aber auch, dass an beiden Enden Kopfabschnitte ausgebildet sind. Oder dass an beiden Enden Gewindeabschnitte ausgebildet sind.

Möglich ist es auch, dass an beiden Enden ein Kopfabschnitt mit einem daran ausgebildeten Gewindeabschnitt umfasst ist. Dann kann z.B. an beiden Ende eine Verdickung als Kopfabschnitt umfasst sein, wobei an dem Kopfabschnitt ein zylindrischer Gewindeabschnitt ausgebildet ist. Das ermöglicht eine flexible Verwendung.

In vorteilhaften Weiterbildungen umfasst wenigstens ein Endstück einen Querschnittsbereich mit darin eingebetteten Langfasern als Verstärkungselementen und wenigstens einen Querschnittsabschnitt mit darin eingebetteten kürzeren Verstärkungselementen. Dabei sind die kürzeren Verstärkungselemente kürzer ausgebildet als die längeren Verstärkungselemente bzw. Langfasern. Besonders bevorzugt sind die kürzeren Verstärkungselemente kürzer als 1/5 oder 1/10 der Länge der Langfasern. Die Länge der Langfasern entspricht insbesondere etwa bzw. im Wesentlichen der Speichenlänge und erreicht oder übersteigt wenigstens 90 % oder 95 % oder 99 % der Länge der Speiche insgesamt. Bevorzugte Varianten von kürzeren Verstärkungselementen, die als Fasern ausgebildet sind, können im Rahmen dieser Anmeldung auch als Kurzfasern bezeichnet werden.

Es ist möglich, dass der Querschnittsabschnitt frei von Langfasern ausgebildet ist. Bevorzugt ist es, dass der Querschnittsabschnitt einen geringeren Anteil an Langfasern umfasst als der Querschnittsbereich. Besonders bevorzugt ist der Zentralbereich des Mittelstücks ein Querschnittsbereich mit (ausschließlich) Langfasern als Verstärkungselementen. Da die Langfasern im Prinzip durch die gesamte Speiche verlaufen, gibt es auch an den Enden (im Zentrum oder darum herum) Langfasern.

Vorzugsweise wird wenigstens ein Teil der Verstärkungselemente durch Kurzfasern gebildet, die erheblich kürzer als die Langfasern ausgebildet sind.

Ein Querschnittsbereich kann auch als Langfaserbereich bezeichnet werden und ein Querschnittsabschnitt kann auch als Kurzfaserbereich bezeichnet werden. Unter Kurzfasern werden insbesondere Verstärkungsfasern verstanden, die eine Länge zwischen 0,1 mm oder 0,2 mm und etwa 3 cm aufweisen. Besonders bevorzugt sind Kurzfasern kürzer als 10 mm.

Vorzugsweise weist ein erheblicher Teil des Querschnittsbereichs ausschließlich Langfasern als Verstärkungselementen auf. Vorzugsweise weist ein erheblicher Teil des Querschnittsabschnitts gar keine oder nur sehr wenige oder ausschließlich kürzere Verstärkungselemente (zum Beispiel in Form von Kurzfasern) auf. Dabei weisen der Querschnittsbereich und der Querschnittsabschnitt (an wenigstens einer Längsstelle) jeweils erhebliche Anteile des Querschnitts der Speiche auf. Der Querschnittsabschnitt kann wenigstens 5% oder wenigstens 10% oder auch 20% oder 30% oder mehr der Querschnittsfläche der Speiche an wenigstens einem Endstück bilden.

An dem Mittelstück kann der (im Wesentlichen oder nahezu der ganze) Querschnitt durch den Querschnittsbereich gebildet werden. Ein Anteil an der Querschnittsfläche der Speiche an wenigstens einer Stelle in dem Mittelstück liegt vorzugsweise über 75% und insbesondere über 80% oder über 90% oder bei 95% oder mehr. In dem Querschnittsbereich sind die Langfasern vorzugsweise homogen verteilt. In bevorzugten Ausgestaltungen wird wenigstens ein Teil der kürzeren Verstärkungselemente durch Faserschnipsel und/oder Verstärkungspartikel gebildet. Faserschnipsel sind insbesondere flächige Elemente. Verstärkungspartikel können Kugelelemente, Pulverpartikel oder auch unregelmäßige Partikel sein.

Es ist auch möglich, dass der Querschnittsabschnitt nur eine geringe Menge an Verstärkungselementen aufweist, sodass ein Gewichtsanteil an Verstärkungselementen in dem Querschnittsabschnitt viel geringer als ein Gewichtsanteil an Verstärkungselementen in dem Querschnittsbereich ist. Es kann eine geringere Menge an kürzeren Verstärkungselementen in dem Querschnittsbereich enthalten sein. Es kann auch sein, dass nahezu keine oder gar keine Verstärkungselemente in dem Querschnittsbereich vorhanden sind.

In besonders bevorzugten Ausgestaltungen umfasst der Querschnittsabschnitt das gleiche Matrixmaterial wie der Querschnittsbereich. Das bedeutet insbesondere, dass in dem Kurzfaserbereich und in dem Langfaserbereich das gleiche oder sogar dasselbe Matrixmaterial eingesetzt wird. Das bedeutet dann, dass das Matrikelmatrixmaterial der Speiche insgesamt vorzugsweise einheitlich ist.

So kann in der ganzen Speiche das gleiche Matrixmaterial bzw. der gleiche Materialtyp des Matrixmaterials eingesetzt werden. Gegebenenfalls ist es auch möglich, dass leicht unterschiedliche Matrixmaterialien verwendet werden, wobei es besonders bevorzugt ist, dass die Grundbestandteile des Matrixmaterials identisch sind.

Es ist ebenso bevorzugt, dass das Material der Verstärkungselemente der Speiche insgesamt einheitlich ist. Dabei ist es aber möglich und bevorzugt, dass sich das Material der Verstärkungselemente in dem Querschnittsabschnitt von dem Material der Verstärkungselemente in dem Querschnittsbereich wenigstens teilweise unterscheidet. Dabei bestehen die Unterschiede dann nicht nur in Form und Größe, sondern auch in der Art und Zusammensetzung des verwendeten Materials. Dabei kann insbesondere wenigstens ein Teil der kürzeren Verstärkungselemente aus einem anderen Material als die Langfasern bestehen. So können beispielsweise Kohle- oder Carbonfasern für die Langfasern eingesetzt werden, während Glasfasern als Kurzfasern oder Glaspartikel zum Beispiel in dem Bereich eines Gewindes eingesetzt werden. Bevorzugt umfasst wenigstens ein Teil der kürzeren Verstärkungselemente Glasfasermaterial.

In besonders bevorzugten Ausgestaltungen ist die Speiche werkstoffeinstückig ausgebildet. Besonders bevorzugt finden sich in dem Volumen des Speichenkörpers keine konkreten Materialgrenzflächen, wie sie zum Beispiel beim Verkleben oder auch beim Verschweißen von zwei separaten Werkstücken auftreten.

Vorzugsweise weist der Querschnittsbereich (Langfaserbereich) in wenigstens einem Endabschnitt einen von einem rotationssymmetrischen Querschnitt abweichenden Querschnitt auf. So ist es bevorzugt, dass eine Umhüllende der Langfasern in dem Querschnittsbereich einen von einem rotationssymmetrischen Querschnitt abweichenden Querschnitt aufweist. Dabei wird unter einer "Umhüllenden" eine "Hüllkurve" oder eine (virtuelle) Form verstanden, die sich möglichst eng an die Verstärkungselemente anlegt. Die Hüllkurve verdeutlicht nur die Struktur, ist aber keine reale Schicht.

In allen Weiterbildungen und Ausgestaltungen ist es bevorzugt, dass der abweichende Querschnitt eine Form aufweist, welche aus einer Gruppe von Formen entnommen ist, welche (näherungsweise) eine mehreckige, sternförmige, ovale, elliptische oder kegel-oder T- oder L- oder H-förmige Form umfasst, wobei die Ecken abgerundet sein können. Durch solche Ausgestaltungen wird die Übertragung eines höheren Drehmoments zuverlässig gewährleistet, welches gegebenenfalls beim Befestigen oder Justieren der Speiche auftritt.

Generell werden bei der Montage von Speichen in einem Laufrad die Speichen unter eine derartige Zugspannung gesetzt, dass im regelmäßigen Betrieb bei allen auftretenden Belastungen immer eine Zugspannung innerhalb der Speiche vorliegt.

In einer Ausgestaltung ist vorzugsweise der Querschnittsabschnitt zentrisch in dem Endstück aufgenommen und weist einen konusähnlichen Abschnitt auf. Dann ist es möglich, dass in dem Endstück Langfasern den konusähnlichen Abschnitt ringsum umgeben.

Vorzugsweise umgibt der Querschnittsabschnitt den Querschnittsbereich (Langfaserbereich) radial und der Querschnittsabschnitt bildet eine Verdickung an dem Endstück. Besonders bevorzugt ist an dem Querschnittsabschnitt (mit kürzeren Verstärkungselementen) der Gewindeabschnitt ausgebildet.

Besonders bevorzugt erstrecken sich die Langfasern durch einen Zentralbereich des Mittelabschnitts und wenigstens einen Zentralbereich eines Endstücks. Das Endstück kann mit dem Gewindeabschnitt einen Zentralbereich umfassen, durch den sich die Langfasern erstrecken und einen Ringbereich, in dem das Gewinde angeformt ist und in dem kürzere Verstärkungselemente eingebracht sind.

In allen Ausgestaltungen ist es besonders bevorzugt, dass in den Querschnittsbereich ein thermoplastisches Matrixmaterial umfasst ist. Besonders bevorzugt ist in dem Speichenkörper insgesamt ein thermoplastisches Matrixmaterial umfasst. Besonders bevorzugt wird (nur) wenigstens ein thermoplastisches Matrixmaterial als Matrixmaterial in dem Speichenkörper verwendet. Besonders bevorzugt wird eine Speiche (im Wesentlichen) durch Pultrusion mit einem thermoplastischen Matrixmaterial hergestellt und auf Länge gekürzt. An das Mittelstück werden die Endstücke oder Teile davon mit (einem gleichartigen) thermoplastischen Matrixmaterial angespritzt, während das Matrixmaterial des Mittelstücks noch flüssig ist oder nachdem es wieder flüssig gemacht wurde.

Eine weitere erfindungsgemäße Laufradkomponente eines Fahrzeugs und insbesondere Fahrrads ist insbesondere für einen bestimmungsgemäßen Normalbetrieb oder Regelbetrieb von wenigstens teilweise muskelbetriebenes Zwei- oder Mehrrädern vorgesehen und umfasst eine Felge und eine Nabe und separate und gerade ausgebildete Speichen. Wenigstens eine Speiche umfasst ein Mittelstück und zwei gegenüberliegende und voneinander entfernte Endstücke. Über die Endstücke ist die Nabe mit der Felge über die Speichen lösbar verbunden. Wenigstens eines der Endstücke kann einen Kopfabschnitt (Speichenkopf) und wenigstens eines der Endstücke kann einen Gewindeabschnitt umfassen, der mit einem Gewinde an einem Speichennippel verschraubt ist. Die Speiche bzw. der Speichenkörper der Speiche ist aus wenigstens einem Faserverbundwerkstoff gefertigt und umfasst wenigstens ein Matrixmaterial und darin eingebettete Verstärkungselemente. Die Endstücke sind einstückig mit dem Mittelstück ausgebildet und bilden jeweils ein Ende der Speiche aus. Wenigstens einige der Verstärkungselemente sind als Langfasern (lange Verstärkungsfasern) ausgebildet und erstrecken sich vollständig durch das Mittelstück und jeweils über wenigstens einen wesentlichen Teil beider Endstücke.

Auch diese erfindungsgemäße Laufradkomponente hat viele Vorteile.

Vorzugsweise ist das Mittelstück der Speiche aerodynamisch geformt. Das ermöglicht einen geringeren Luftwiderstand bei geringem Gewicht. Vorzugsweise ist das Endstück in der Speiche wenigstens nahezu vollständig oder vollständig innerhalb der Felge aufgenommen. Das ermöglicht eine besonders vorteilhafte Ausgestaltung, bei der das aerodynamische Mittelstück sich bis an die Felge heran erstreckt. Ein Übergangsbereich ist dann nicht nötig. Da gerade im radial äußersten Bereich der Speiche an der Felge die größten Relativgeschwindigkeiten zur Umgebung auftreten, ist eine aerodynamische Ausgestaltung dort besonders vorteilhaft. Das wird durch die Erfindung ermöglicht.

Vorzugsweise wird wenigstens ein Speichennippel aus Faserverbundwerkstoff eingesetzt und mit der Speiche verschraubt. Besonders bevorzugt sind alle Speichen und alle Speichennippel aus Faserverbundwerkstoff gefertigt.

Besonders bevorzugt umfasst das Material der Felge und auch das Material des Gehäuses der Nabe Faserverbundwerkstoff und/oder Metall.

Weitere Vorteile ergeben sich aus den Ausführungsbeispielen, die im Folgenden mit Bezug auf die beiliegenden Figuren erläutert werden.

In den Figuren zeigen:
- Figur 1: eine schematische Darstellung eines Rennrades;
- Figur 2: eine schematische Darstellung eines Mountainbikes;
- Figuren 3-7: schematische Schnittdarstellungen von Speichen;
- Figuren 8-10: Seitenansichten und eine perspektivische Ansicht einer Speiche; und
- Figuren 11-13: schematische Ansichten eines Speichennippels.

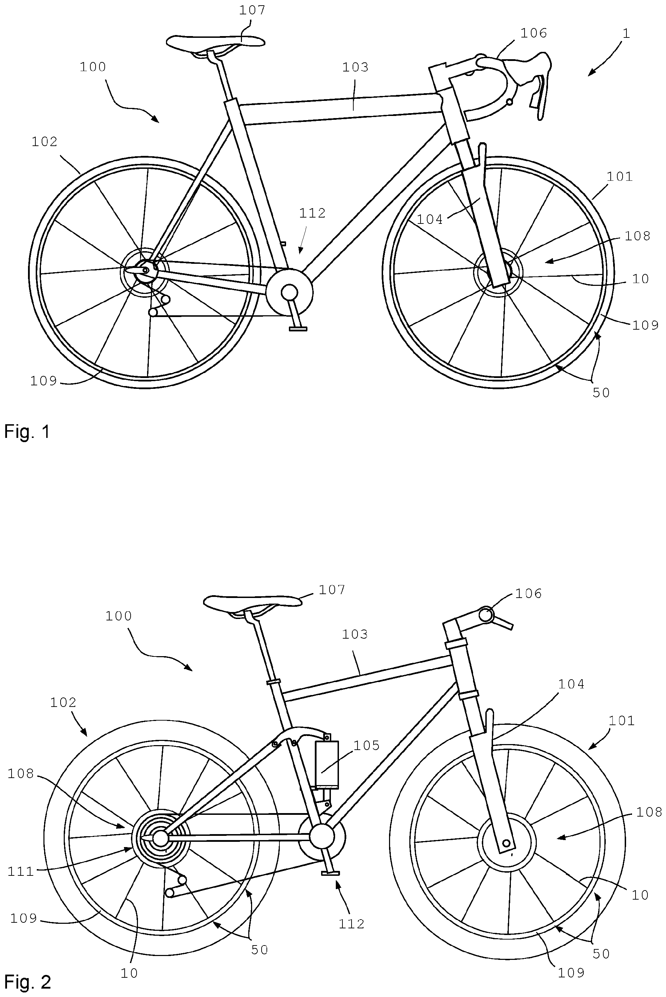

In den Figuren 1 und 2 sind jeweils ein Mountainbike bzw. ein Gravel-Fahrrad oder Rennrad 100 dargestellt, die jeweils mit erfindungsgemäßen Laufradkomponenten 1 ausgerüstet sind. Das Mountainbike bzw. Rennrad 100 verfügt jeweils über ein Vorderrad 101 und ein Hinterrad 102.

Die beiden Räder 101, 102 verfügen über Speichen 10. Eine Ritzeleinrichtung 111 ist vorgesehen. Grundsätzlich können konventionelle Felgenbremsen oder auch andere Bremsen wie zum Beispiel Scheibenbremsen vorgesehen sein.

Die Fahrräder 100 verfügen jeweils über einen Rahmen 103, einen Lenker 106, einen Sattel 107, eine Gabel bzw. eine Federgabel 104 und im Falle des Mountainbikes oder einem Rennrad oder Gravel-Fahrrad (Gravelbike) kann ein Hinterraddämpfer 105 vorgesehen sein. Zum Antrieb dient eine Tretkurbel 112 mit Pedalen.

Gegebenenfalls kann ein elektrischer Hilfsantrieb an der Tretkurbel 112 und/oder den Rädern vorgesehen sein. Die Nabe der Räder kann jeweils über eine Spanneinrichtung wie zum Beispiel eine Steckachse oder einen Schnellspanner an dem Rahmen befestigt sein.

In den Figuren 1 und 2 sind anmeldungsgemäße Laufradkomponente 1 mit Speichen 10 und Speichennippeln 50 zu erkennen. Die Speichen verbinden die Nabe 108 mit der Felge 109. Hier sind die Speichennippel 50 im Innenraum der Hohlkammerfelge 109 aufgenommen, sodass sie in der Seitenansicht nicht sichtbar sind.

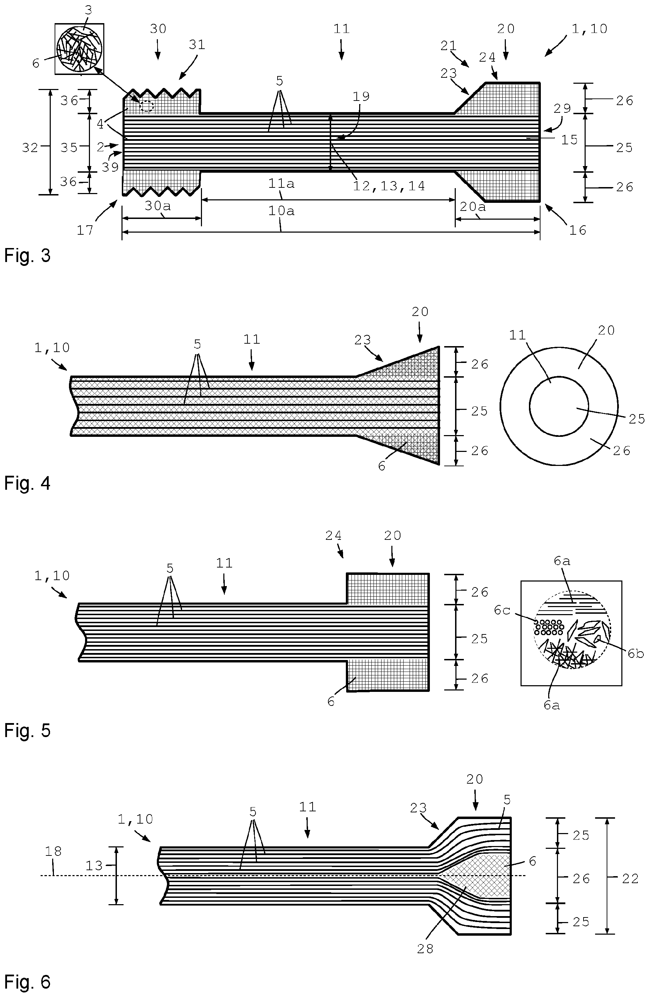

In den Figuren 3 bis 10 sind unterschiedliche anmeldungsgemäße Laufradkomponenten 1 gebildet, die als Speichen 10 ausgeführt sind. In Figur 3 ist ein Querschnitt durch eine Speiche 10 dargestellt, die ein langgestrecktes Mittelstück 11 und zwei Endstücke 20, 30 aufweist. Die Speiche 10 ist insgesamt einstückig ausgearbeitet und der Speichenkörper 15 weist keinerlei Trennflächen zwischen den Endstücken 20, 30 und dem Mittelstück 11 auf.

Die Speiche 10 besteht aus einem Faserverbundwerkstoff 2 und umfasst ein Matrixmaterial 3 und Verstärkungselemente 4. Dabei erstrecken sich Langfasern 5 (wenigstens nahezu) vollständig über die Länge 10a der Speiche 10 zentrisch durch das Endstück 30, das Mittelstück 11 und das Endstück 20 am anderen Ende der Speiche 10. Ganz am Ende können die Langfasern 5 abgedeckt sein, sodass sie von außen nicht erkennbar sind.

Es sei darauf hingewiesen, dass in den Figuren 3-10 die Laufradkomponente 1 mit der Speiche 10 nicht maßstäblich dargestellt ist, um die einzelnen Teile und Komponenten der Speiche 10 deutlicher zeigen zu können. In Realität weist die Speiche 10 eine Länge 10a von zum Beispiel 290 mm oder 300 mm auf und kann, wenn sie nicht aerodynamisch ausgebildet ist, beispielsweise einen Durchmesser zwischen 1 mm und 3 mm oder 4 mm aufweisen. Auch andere Abmessungen sind möglich. Diese Abmessungen werden hier auch angegeben, um zu verdeutlichen, dass die Abbildungen nicht maßstabsgetreu dargestellt sind.

In Figur 3 ist zu erkennen, dass das Endstück 30 über einen Gewindeabschnitt 31 verfügt, welcher als Außengewinde ausgebildet ist und sich hier über die vollständige Breite bzw. Länge 30a des Endstücks 30 erstreckt. Das andere Endstück 20 verfügt über einen Konusabschnitt 23, der an das Mittelstück 11 angrenzt und über einen Stütz- oder Zylinderabschnitt 24, der sich an den Konusabschnitt 23 anschließt und bis zum Ende der Speiche reicht.

In einfachen Ausgestaltungen ist das Mittelstück 11 rund ausgebildet, sodass die minimale Querabmessung 12, die mittlere Querabmessung 13 und die maximale Querabmessung 14 jeweils einen gleichen Wert aufweisen und hier dem Durchmesser des Mittelstücks 11 entsprechen. In anderen Ausgestaltungen kann die Speiche 11 z.B. aerodynamisch ausgebildet sein, sodass sich die minimale, mittlere und maximale Querabmessung 12-14 jeweils voneinander unterscheidet.

Über die vollständige Länge der Speiche 10 erstrecken sich die Langfasern 5 als Verstärkungselemente 4. Dabei befinden sich die Langfasern 5 in den Endstücken 20, 30 jeweils nur in dem (zentrischen) Querschnittsbereich 25 an dem Endstück 20 und dem zentrischen Querschnittsbereich 35 an den Endstücken 30.

An den Endstücken 30 schließt sich radial nach außen an den Querschnittsbereich 35 der Querschnittsabschnitt 36 an, der ebenfalls aus einem Faserverbundwerkstoff 2 besteht und hier über das gleiche Matrixmaterial 3 verfügt wie auch das Mittelstück 11.

Im Unterschied zum Mittelstück 11 und den Querschnittsbereichen 25, 35, werden in den Querschnittsabschnitten 26, 36 gar keine oder (nur) kürzere Verstärkungselemente eingesetzt, die hier aus Kurzfasern 6a oder Faserschnipseln 6b und/oder Verstärkungspartikeln 6c bestehen können.

In einfachen Ausgestaltungen werden Kurzfasern 6a zusammen mit einem Matrixmaterial 3 an den Enden 16, 17 angespritzt, wobei das Matrixmaterial 23 wenigstens dort zunächst wieder aufgeschmolzen wird, sofern es sich zuvor schon (etwas) verfestigt hatte. Durch diese Herstellung bedingt entstehen zwischen dem Querschnittsabschnitt 36 und dem Querschnittsbereich 35 innerhalb des Matrixmaterials 3 keine separaten Grenzflächen oder Klebeflächen oder Oberflächen. Ein Übergang zwischen den Querschnittsbereich 35 und zum Beispiel dem Querschnittsabschnitt 36 ist nur durch die Veränderung des eingebetteten Verstärkungsmaterials verstellbar. Das führt zu einer besonders hohen Belastbarkeit der anmeldungsgemäßen Laufradkomponente 1.

Bei dem Ausführungsbeispiel nach Figur 3 befinden sich in den Zentralbereichen 29, 39 der Endstücke die Langfasern 5.

In Figur 4 ist ein etwas anderes Ausführungsbeispiel einer anmeldungsgemäßen Laufradkomponente 1 mit einer Speiche 10 dargestellt, wobei hier nur das Endstück 20 und ein Teil des Mittelstücks 11 abgebildet ist.

Im Unterschied zu Figur 3 ist hier das Endstück 20 insgesamt kegelförmig ausgebildet. Auch hier ist der Querschnittsbereich 25 von Langfasern 5 durchsetzt, während sich radial nach außen der Querschnittsabschnitt 26 mit dem gleichen Matrixmaterial 3, aber kürzeren Verstärkungselementen 6, anschließt. Das Endstück 20 bildet auch hier den Kopfabschnitt 21 der Speiche 10 und dient zur Abstützung der Speiche an der Felge oder der Nabe.

Wie die schematische Skizze im rechten Teil von Figur 4 zeigt, sind im Ausführungsbeispiel nach Figur 4 sowohl das Mittelstück 11 als auch das Endstück 20 rotationssymmetrisch ausgebildet. Auch hier ist es möglich, dass das Mittelstück 11 aerodynamisch ausgebildet ist, sodass dann die Querschnittsform von der Kreisform abweicht.

Figur 5 zeigt eine weitere Variante einer Speiche 10 als Laufradkomponente 1, bei der das Endstück 20 über keinen Konusabschnitt 23, sondern hier nur einen rechtwinklig abstehenden Stütz- oder Zylinderabschnitt 24 verfügt.

Im rechten Teil von Figur 5 sind beispielhaft einige unterschiedliche Verstärkungselemente 6a, 6b und 6c eingezeichnet, die in dem Querschnittsabschnitt 26 an dem Endstück 20 (und in dem Querschnittsabschnitt 36 des anderen Endstücks 30) eingesetzt werden können.

Dabei können sowohl wirr angeordnete kürzere Verstärkungselemente 6a als auch gleichgerichtet ausgerichtete Verstärkungselemente 6a in kurzer Form als auch Faserschnipsel 6b in gleicher oder unterschiedlicher Orientierung und auch Verstärkungspartikel 6c eingesetzt werden. Möglich ist auch eine Kombination unterschiedlicher Verstärkungselemente 6a, 6b und 6c.

Figur 5 zeigt nur ein Endstück 20. Das andere Endstück 30 kann identisch ausgebildet sein. Oder beide Endstücke 20, 30 weisen jeweils (auch) einen Gewindeabschnitt 31 auf. Die Form eines oder beider Endstücke kann ausgebildet sein, wie in Fig. 3, 4 oder 5 abgebildet. Ein Laufrad kann unterschiedliche Speichen umfassen.

Figur 6 zeigt eine Variante einer Laufradkomponente mit einer Speiche 10, wobei hier an dem Endstück 20 nach der Pultrusion das Ende 16 aufgeschmolzen und ein konusähnliches Element eingeführt wird, wobei der Hohlraum nach dem Entfernen einen konusähnlichen Abschnitt 28 hinterlässt, der mit einem Faserverbundwerkstoff 2 und einem Matrixmaterial 3 und Verstärkungselementen 4 aufgefüllt wird. Zentral wird hier der Querschnittsabschnitt 26 mit kürzeren Verstärkungselementen 6 zur Verfügung gestellt, während sich die Langfasern 5 in dem Querschnittsbereich 25 dann ringförmig um den Querschnittsabschnitt 26 erstrecken. Insgesamt ist das Endstück so auf einen Durchmesser 22 aufgeweitet.

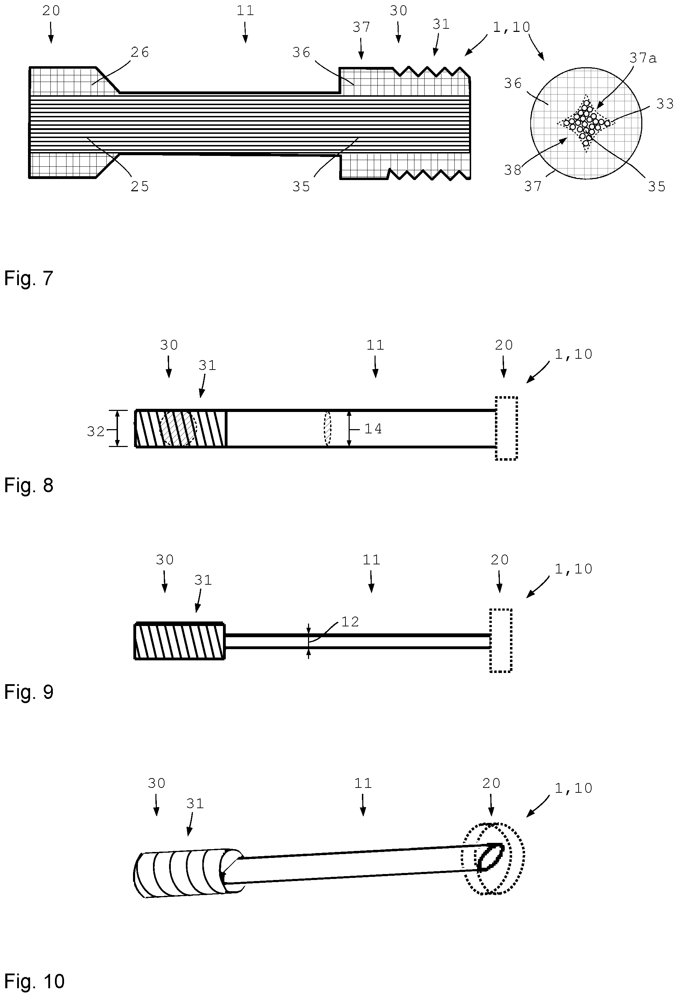

Figur 7 zeigt eine weitere Variante, wobei hier das Endstück 30 länger ausgebildet ist bzw. wobei sich hier der Gewindeabschnitt 31 nicht über die vollständige Länge des Endstücks 30 erstreckt. Es schließt sich ein Endabschnitt 37 an, der hier zylindrisch ausgebildet ist.

Auch in Figur 7 sind die Langfasern 5 über die vollständige Länge der Speiche 10 vorgesehen und erstrecken sich praktisch vollständig über die Länge der Endstücke 20, 30 und des Mittelstücks 11.

Im rechten Teil von Figur 7 ist ein Querschnitt in dem Endabschnitt 37 abgebildet. Hier wird deutlich, dass die im Mittelstück 11 innerhalb eines Kreises angeordneten Verstärkungselemente 4 in dem Endstück 30 (und gegebenenfalls auch in dem Endstück 20) eine andere Querschnittsform einnehmen. Und zwar wird die Querschnittsform unrund ausgestaltet, sodass sich ein abweichender Querschnitt 37a ergibt, der hier einem Rechteck ähnelt, welches an den Seitenflächen Einbeulungen aufweist. Die gestrichelt eingezeichnete Hüllkurve 33 umgibt die Verstärkungselemente 4 möglichst eng und ist nur eingezeichnet, um die Form zu verdeutlichen. Real gibt es diese Hüllkurve nicht. Es handelt sich nicht um eine separate Schicht. Der Speichenkörper ist werkstoffeinstückig gefertigt. Die Querschnittsform kann auch als sternförmig bezeichnet werden. Dadurch wird die Übertragung eines höheren Drehmoments ermöglicht, was bei der Einstellung der Speichenspannung von Vorteil ist.

Es sind auch andere abweichende Querschnittsformen für den Querschnittsbereich bzw. Langfaserbereich 35 möglich, so kann dessen Querschnittsform auch dreieckig oder oval oder T-förmig oder V-, oder W-förmig oder dergleichen ausgebildet sein.

In den Figuren 8-10 ist eine weitere Laufradkomponente mit einer Speiche 10 abgebildet, wobei Figuren 8 und 9 zwei Seitenansichten zeigen, wobei klar wird, dass die Speiche 10 aerodynamisch ausgestaltet ist, sodass die minimale Querabmessung 12 erheblich geringer ist als die maximale Querabmessung 14 in dem Mittelstück 11.

An den Enden 16, 17 ist die Speiche 10 an den Endstücken 20, 30 jeweils wieder rund ausgebildet und verfügt an dem Endstück 30 über einen Gewindeabschnitt 31. Der Außendurchmesser 32 an dem Endstück 30 kann der maximalen Querabmessung 14 in dem Mittelstück 11 entsprechen.

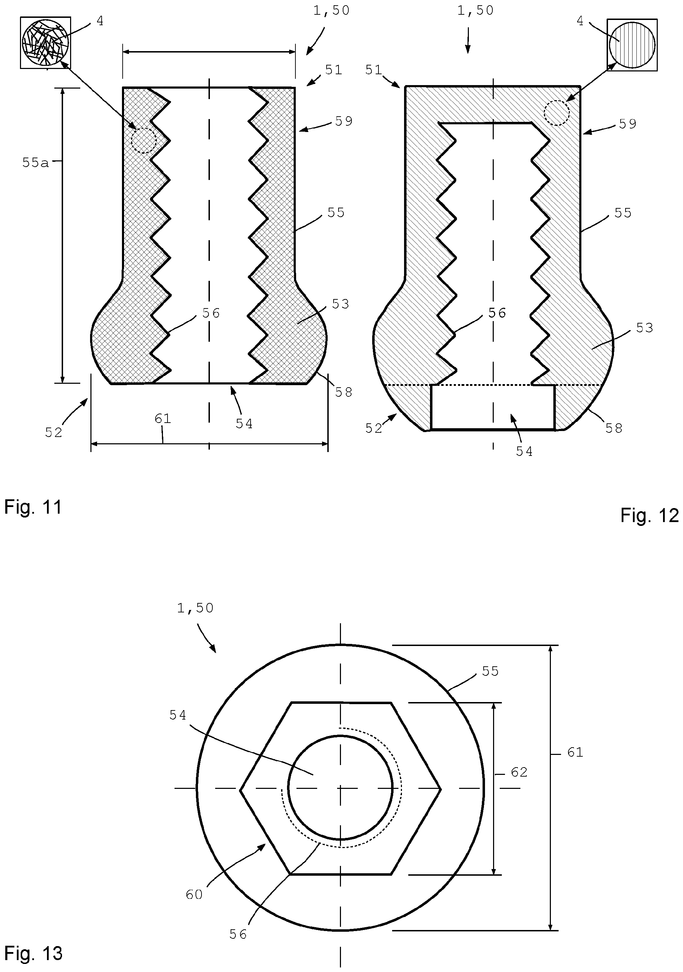

In den Figuren 11, 12 und 13 ist eine anmeldungsgemäße Laufradkomponente 1 mit einem Speichennippel 50 abgebildet. Dabei zeigen die Figuren 11 und 12 zwei leicht unterschiedliche Ausführungsbeispiele jeweils in einem Querschnitt.

Der Speichennippel 50 besteht jeweils aus einem Faserverbundwerkstoff 2 mit einem Matrixmaterial 3 und Verstärkungselementen 4. Die Verstärkungselemente 4 können als Langfasern 5 oder als kürzere Verstärkungselemente 6 ausgebildet sein.

Der Speichennippel 50 verfügt über einen Nippelkörper 55, der sich über eine Länge 55a erstreckt, die zum Beispiel 10 mm betragen kann. Möglich sind auch etwas kürzere und auch etwas längere Ausgestaltungen. Der Nippelkörper 55 weist eine größere Länge 55a als ein Durchmesser 61 des Nippelkörpers auf.

Der Nippelkörper verfügt über Endabschnitte 51 und 52 an den Enden 58 und 59. An dem Ende 58 ist der Nippelkopf 53 ausgebildet, der abgerundet ausgebildet ist und die Anlagefläche zur Verfügung stellt, an der sich der Nippel zum Beispiel an der Felge abstützt.

An dem Nippelkopf 53 ist eine Aufnahme 54 für das Gewindeende einer Speiche ausgebildet. In der Aufnahme ist ein Innengewinde 56 ausgebildet. Über das Gewinde 56 kann der Nippelkopf 53 auf ein Speichenende aufgeschraubt werden. Die Aufnahme 54 kann als Durchgangsöffnung ausgebildet sein. Es ist auch möglich, dass das andere Ende 51 teilweise oder ganz verschlossen ist. Dann ist die Aufnahme 54 ein Sackloch.

Figur 13 zeigt eine Draufsicht auf den Endabschnitt 51 des Speichennippels 50. Dadurch ist die Werkzeuganlage 60 mit der Schlüsselweite 62 an dem Nippelkörper 55 zu sehen. Zentral ist die Aufnahme 54 zu erkennen, in der das Gewinde 56 ausgebildet ist.

Durch den Einsatz von Speichennippeln 50 aus Faserverbundwerkstoff kann ein leichterer Speichennippel zur Verfügung gestellt werden, der weiterhin auch eine mögliche Kontaktkorrosion verschiedener Metalle miteinander zuverlässig verhindert. Insbesondere, wenn Verstärkungselemente mit einem Glasfaseranteil eingesetzt werden, werden derartige Probleme zuverlässig verhindert.

In allen Ausgestaltungen wird eine stoffschlüssige und werkstoffeinstückige Verbindung erzielt.

Bei der Herstellung von Speichennippel 50 können beispielsweise in einer Herstellform 20, 30, 40 oder mehr Kavitäten gleichzeitig gefüllt werden, sodass nach der Herstellung eines Werkzeugs eine kostengünstige Herstellung möglich ist.

Das Gewinde wird bei den Laufradkomponenten unmittelbar in dem Faserverbundwerkstoff zur Verfügung gestellt.

### Bezugszeichenliste:

| | | | |
|---|---|---|---|
| 1 | Laufradkomponente | 32 | Außendurchmesser |
| 2 | Faserverbundwerkstoff | 33 | Hüllkurve |
| 3 | Matrixmaterial | 35 | Querschnittsbereich, Langfaserbereich |
| 4 | Verstärkungselemente | | |
| 5 | Langfaser | 36 | Querschnittsabschnitt Kurzfaserabschnitt |
| 6 | kürzere Verstärkungselemente | | |
| | | 37 | Endabschnitt |
| 6a | Kurzfasern | 37a | abweichender Querschnitt |
| 6b | Faserschnipsel | 38 | konusähnlicher Abschnitt |
| 6c | Verstärkungspartikel | 39 | Zentralbereich |
| 7 | Längsachse | 50 | Speichennippel |
| 10 | Speiche | 51 | Endabschnitt |
| 10a | Länge von 10 | 52 | Endabschnitt |
| 11 | Mittelstück | 53 | Nippelkopf |
| 11a | Länge von 11 | 54 | Aufnahme |
| 12 | Querabmessung (minimal) | 55 | Nippelkörper |
| 13 | Querabmessung (mittel) | 55a | Länge |
| 14 | Querabmessung (maximal) | 56 | Gewinde |
| 15 | Speichenkörper | 58 | Ende (abgerundet) |
| 16 | Ende | 59 | Ende (Werkzeugende) |
| 17 | Ende | 60 | Werkzeuganlage |
| 19 | Zentralbereich | 61 | Durchmesser |
| 20 | Endstück | 62 | Schlüsselweite |
| 20a | Länge von 20 | 100 | Fahrrad |
| 21 | Kopfabschnitt | 101 | Rad, Vorderrad |
| 22 | Außendurchmesser | 102 | Rad, Hinterrad |
| 23 | Konusabschnitt | 103 | Rahmen |
| 24 | Stütz-, Zylinderabschnitt | 104 | Gabel, Federgabel |
| 25 | Querschnittsbereich | 105 | Hinterraddämpfer |
| 26 | Querschnittsabschnitt | 106 | Lenker |
| 28 | konusähnlicher Abschnitt | 107 | Sattel |
| 29 | Zentralbereich | 108 | Nabe |
| 30 | Endstück | 109 | Felge |
| 30a | Länge von 30 | 111 | Ritzeleinrichtung |
| 31 | Gewindeabschnitt | 112 | Tretkurbel |

## Patentansprüche

1. Laufradkomponente für ein Fahrzeug (100) und insbesondere für Fahrräder, mit einer gerade ausgebildeten Speiche (10) mit einem Mittelstück (11) und zwei Endstücken (20, 30), um die Speiche (10) mittels der Endstücke (20, 30) lösbar mit einer Nabe (108) und mit einer Felge (109) zu verbinden, wobei wenigstens eines der Endstücke (30) einen Gewindeabschnitt (31) umfasst,
wobei die Speiche (10) aus einem Faserverbundwerkstoff (2) gefertigt ist und wenigstens ein Matrixmaterial (3) und darin eingebettete Verstärkungselemente (4) umfasst, wobei die Speiche ohne Schlaufen und Ösen ausgebildet ist,
**dadurch gekennzeichnet,**
**dass** die Endstücke (20, 30) einstückig mit dem Mittelstück (11) ausgebildet sind und jeweils ein Ende (16, 17) der Speiche (10) bilden,
**dass** der Gewindeabschnitt (31) einstückig mit dem Endstück (20, 30) ausgebildet ist, und dass wenigstens einige der Verstärkungselemente (4) als Langfasern (5) ausgebildet sind und sich vollständig durch das Mittelstück (11) und jeweils über wenigstens einen wesentlichen Teil beider Endstücke (20, 30) erstrecken, und dass wenigstens ein Endstück (20, 30) einen Querschnittsbereich (25, 35) mit darin eingebetteten Langfasern (5) als Verstärkungselementen (4) und wenigstens einen Querschnittsabschnitt (26, 36) ohne darin eingebettete Langfasern (5) umfasst.

2. Laufradkomponente (1) nach Anspruch 1, wobei wenigstens ein Endstück (20, 30) einen größeren Außendurchmesser (22, 32) aufweist als wenigstens eine Querabmessung (12, 13, 14) in dem Mittelstück (11) und wobei wenigstens eines der Endstücke (30) den Gewindeabschnitt (31) zur Verschraubung mit einem Speichennippel (50) umfasst.

3. Laufradkomponente (1) nach Anspruch 1 oder 2, wobei wenigstens ein Endstück (20, 30) einen an das Mittelstück (11) angrenzenden Konusabschnitt (23) und einen sich daran anschließenden Stützabschnitt (24) aufweist.

4. Laufradkomponente (1) nach einem der vorhergehenden Ansprüche, wobei wenigstens eines der Endstücke (20) einen Kopfabschnitt (21) zur Abstützung der Speiche aufweist.

5. Laufradkomponente (1) nach einem der vorhergehenden Ansprüche, wobei in dem Querschnittsabschnitt (26, 36) kürzere Verstärkungselemente (6) eingebettet sind.

6. Laufradkomponente (1) nach einem der vorhergehenden Ansprüche, wobei ein erheblicher Teil des Querschnittsbereichs (25, 35) ausschließlich Langfasern aufweist und/oder wobei ein erheblicher Teil des Querschnittsabschnitts (26, 36) keine oder ausschließlich kürzere Verstärkungselemente (6) aufweist, wobei der Querschnittsabschnitt (26, 36) einen erheblichen Anteil an der Querschnittsfläche der Speiche in dem Kopfabschnitt aufweist.

7. Laufradkomponente (1) nach einem der vorhergehenden Ansprüche, wobei wenigstens ein Teil der kürzeren Verstärkungselemente (6) durch Faserschnipsel (6b) oder Verstärkungspartikel (6c) gebildet wird.

8. Laufradkomponente (1) nach einem der vorhergehenden Ansprüche, wobei das Matrixmaterial (3) der Speiche (10) insgesamt einheitlich ist und wobei die Speiche (10) werkstoffeinstückig ausgebildet ist.

9. Laufradkomponente (1) nach einem der vorhergehenden Ansprüche, wobei der Querschnittsbereich (25, 35) in wenigstens einem Endabschnitt (37) einen von einem rotationssymmetrischen Querschnitt abweichenden Querschnitt (37a) aufweist.

10. Laufradkomponente (1) nach einem der vorhergehenden Ansprüche, wobei der Querschnittsabschnitt (26, 36) zentrisch in dem Endstück (20, 30) aufgenommen ist und einen konusähnlichen Abschnitt (38) aufweist oder wobei der Querschnittsabschnitt (26, 36) den Querschnittsbereich (25, 35) radial umgibt und wobei der Querschnittsabschnitt (26, 36) eine Verdickung an dem Endstück (20, 30) bildet.

11. Laufradkomponente (1) nach einem der vorhergehenden Ansprüche, wobei in dem Querschnittsbereich (25, 35) ein thermoplastisches Matrixmaterial umfasst ist und wobei in dem Speichenkörper ein thermoplastisches Matrixmaterial umfasst ist.

12. Laufradkomponente (101, 102) nach einem der vorhergehenden Ansprüche, umfassend eine Felge (109) und eine Nabe (108) und mehrere separate und gerade ausgebildete Speichen (10), wobei die Nabe (108) mit der Felge (109) mittels der Speichen (10) lösbar verbunden ist und die Speichen an den Endstücken (20, 30) abgestützt sind.

13. Laufradkomponente (1, 101, 102) nach dem vorhergehenden Anspruch, wobei das Mittelstück (11) aerodynamisch geformt ist.

14. Laufradkomponente (1, 101, 102) nach einem der beiden vorhergehenden Ansprüche, wobei das Endstück (30) der Speiche (10) wenigstens nahezu vollständig innerhalb der Felge (109) aufgenommen ist.

15. Laufradkomponente nach einem der drei vorhergehenden Ansprüche, wobei das Material der Felge (109) Faserverbundwerkstoff (2) und/oder Metall umfasst.
